# EUROPEAN PATENT SPECIFICATION

(11) **EP 3 065 666 B1**
(45) Date of publication and mention of the grant of the patent: **21.03.2018**
(21) Application number: 14815956.9
(22) Date of filing: 07.11.2014
(51) Int. Cl.: A61C 5/85, A61C 13/15

(54) **OLED DENTAL MATRIX SYSTEM**
DENTALES OLED-MATRIXSYSTEM
SYSTÈME DE MATRICE DENTAIRE À OLED

(30) Priority: 07.11.2013 NZ 61747313
(43) Date of publication of application: 14.09.2016
(73) Proprietor: DENTSPLY SIRONA Inc., York, PA 17401-2991 (US)
(72) Inventor: MCDONALD, Simon, Paul, Katikati (NZ)
(74) Representative: Blodig, Wolfgang
(86) International application number: PCT/US2014/064692
(87) International publication number: WO 2015/070104

(56) References cited:
- WO-A1-2005/064993
- US-A1- 2007 054 233
- US-A1- 2008 058 907
- US-A1- 2015 004 556

## Description

### FIELD OF THE INVENTION

This invention relates generally to the field of dentistry and more specifically to dental matrix devices utilized in conjunction with fillings in the interproximal areas between adjacent teeth.

### BACKGROUND OF THE INVENTION

Matrices and the use of matrix systems are well known and widely utilized in restorative dentistry. There are many types of matrices available. They are generally made entirely of metal or plastic and are sectional or circumferential bands.

US2007/0054233 and WO2014/210439 (a prior art document according to Art. 54(3) EPC) discloses prior art matrix systems. During the restoration of an inter-proximal cavity, the matrix band is secured around the tooth and cavity and forms a mold. This mold is filled with composite material and the composite is light cured. The difficulty with curing an inter-proximal restoration is that once the metal matrix band is wrapped around the tooth, the matrix band does not allow horizontal curing of the composite at the gingivo-proximal tooth surface. It has to be cured from above and this can lead to incomplete curing of the composite resin. When this occurs, composite resin can adhere to the metal matrix rather than the tooth and detach from the restoration when the matrix is removed. The restoration must then be re-done or repaired.

A polymer-based light emitting diode (PLED) is a device that consists of an electroluminescent conductive polymer sandwiched between an anode and a cathode on a substrate. An electrical voltage applied between the electrodes will cause the polymer to glow. These PLED devices are flexible and can be coated on metal surfaces.

Prior art exists of metal matrices with one or two open areas covered with a membrane of transparent material and of matrices with illuminating ports with port covers. These open areas and ports cover a relatively large area of the matrix, They are also very thin and may result in restorations with poor anatomical form. Accordingly, one object of the present invention is to provide a means of effectively forming and light curing interproximal composite restorations. The device is a system that consists of a PLED dental matrix along with a pin-tweezer-type electrical connector.

### SUMMARY OF THE INVENTION

The present invention is defined in the independent claims 1 and 3 with preferred embodiment defined in the dependent claims. The claimed invention, as described herein, provides the dentist with a means of firmly retaining the composite material within the inter-proximal or gingivo-proximal restoration with a metallic matrix. It also allows direct horizontal curing of composite material along with gingivo-proximal tooth surface. The dental matrix according to the present invention comprises (a) a metal matrix band comprising an internal surface and an external surface; and (b) an organic light emitting diode (OLED) layer disposed on at least a first portion of the internal surface of the metal matrix band, the OLED layer comprising a first electroluminescent polymer disposed between a first and a second electrode layer. The OLED layer may be a polymer-based light emitting diode (PLED) wherein the first electroluminescent layer is selected from the group consisting of poly (p-phenylene vinylene), polyfluorene, polyphenylene, and derivatives thereof. The second electrode may also cover substantially all of the internal surface of the dental matrix band or be arranged in a grid pattern and covers less than that all of the internal surface of the dental matrix band. The dental matrix band is a sectional matrix.

In another embodiment of the invention, the dental matrix band electrically couples with an electrified pin-tweezers to apply electrical current across the OLED. The pin tweezers comprises a first and second pin end that are electrical leads to couple with the first and second electrodes. The pin tweezers further comprises a handle with a compartment containing a power source and voltage control circuitry.

### BRIEF DESCRIPTION OF DRAWINGS

Figure 1 is an elevation view of a dental matrix band in accordance with the present invention.
Figure 2 is an elevation view of a dental matrix band in accordance with the present invention.
Figure 3 is a cross section view of a dental matrix, taken along line 3 - 3 in Figure 1.
Figure 4 is a cross section view of a dental matrix, taken along line 4 - 4 in Figure 1.
Figure 5 is an elevation view of a component of the inventive PLED dental matrix system.
Figure 6 is a partial elevation view of the component of the inventive PLED dental matrix system shown in Figure 5.

### DETAILED DESCRIPTION OF THE DRAWINGS

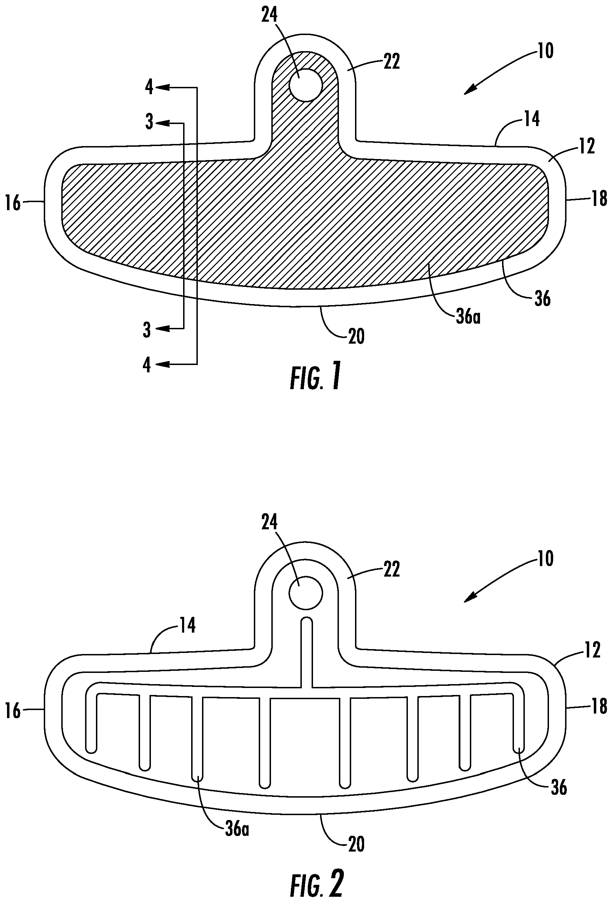

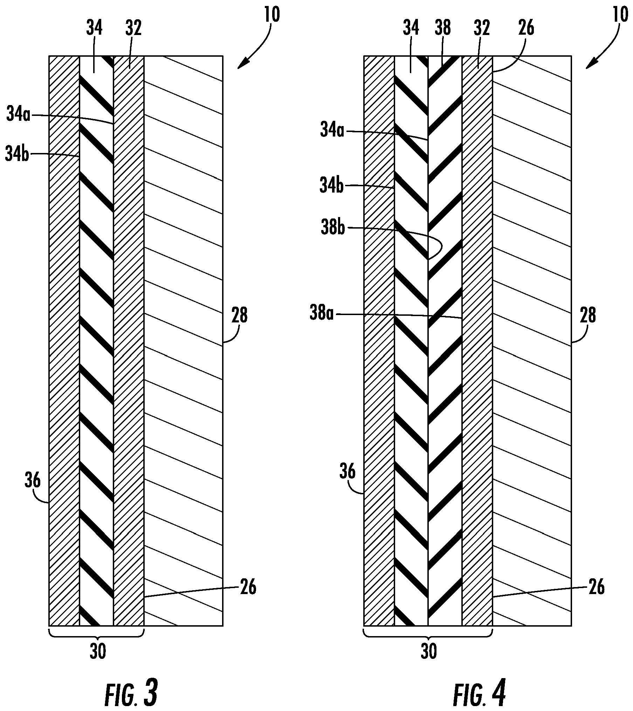

Figures 1-5 show various embodiments and components of the present inventive dental matrix system. The embodiment of Figures 1 and 2 show the basic form of a dental matrix band 10, generally comprising a matrix body 12 having a top margin 14, opposing sides 16, 18, and bottom margin 20. A tab 22 extends from the matrix body 12 at the top margin 14 and include a through-hole 24. The matrix body has an internal and external surface 26, 28 (best seen in Figure 3). The internal surface 24 of the matrix body 12 is coated with an organic light emitting diode (OLED) layer 30. In these embodiments the matrix 10 is a circumferential matrix.

As seen in Figure 3, the OLED layer 30 comprises a first electrode 32, namely the cathode, adjacent the internal surface 24 of the matrix body 12 and an electroluminescent layer 34 sandwiched between the first electrode 32 and a second electrode 36, namely the anode. The electroluminescent layer 34 comprises an emissive layer 34a adjacent the first electrode 32 and a conductive layer 34b adjacent the second electrode 36. In these embodiments, the electroluminescent layer 34 is comprised of a poly (p-phenylene vinylene) (PPV), a polyfluorene, and/or a polyphenylene or derivatives thereof. When the electroluminescent layer 34 is comprised these materials the OLED is a polymer-based light emitting diode (PLED). A significant benefit of this configuration is the ability to provide curing light energy to dental restoration material directly from the interproximal space between adjacent teeth, providing a more consistent curing of the dental restoration materials as compared with the use of a handheld curing light alone. It is contemplated that the curing light energy generated by the inventive dental matrix can be supplemented through the use of a traditional curing light to expose the dental restoration material to light energy from the side and above the restoration area.

Figures 1 and 2 also demonstrate alternative second electrode 36 configurations. In Figure 1, the second electrode 36 is continuously coated as a thin film 36a. In Figure 2 the second electrode 36 is in a partial grid pattern 36b to ensure the flow of electrons throughout the matrix body 12. The second electrode 36 may remain fully exposed to avoid the need for a dedicated lead to electrically couple to a power source. In these embodiments the material selected for use as the second electrode 36 is transparent to enable the light energy generated by the electroluminescent layer 34 to reach the light-curable dental restoration material. One of ordinary skill in the art will also understand to use transparent material for the cathode should the order of the cathode, anode and electroluminescent layer be reversed and the anode is the first electrode 32 adjacent to the internal surface 24 of the matrix body 12.

Additional layers such as a second luminescent layer 38a and second electron conducting layer 38b may also be present to improve the electron transport properties of LED. Figure 4 shows this configuration.

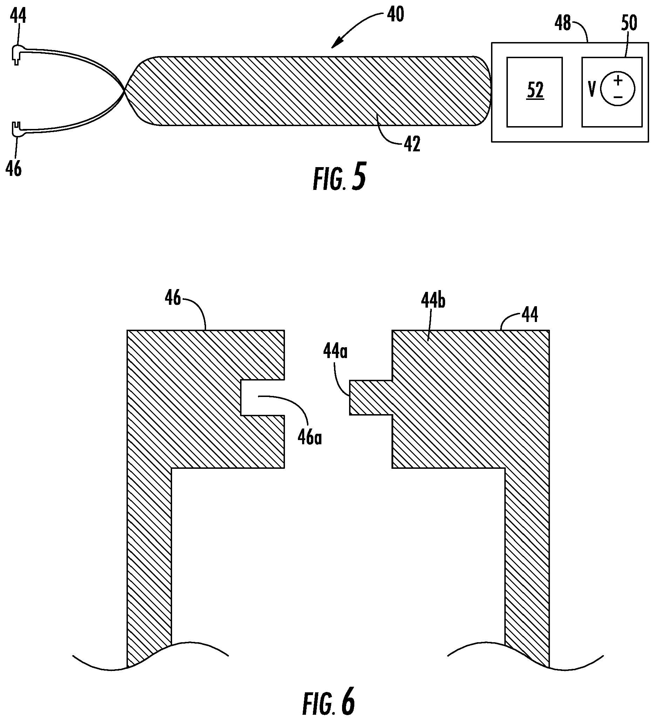

Figures 5 and 6 show pin tweezer 40 intended for use in the inventive dental matrix system and, specifically, intended to provide electrical current to the dental matrix of Figures 1 and 2. The pin tweezer 40 comprises a handle 42 and first and second pin end 44, 46 and compartment 48 in the handle 42 housing a power source 50 and voltage control circuitry 52 to regulate the electrical current being provided to the dental matrix 10. In this embodiment the power source 50 comprises a battery. The first and second pin ends 44, 46 are configured to electrically couple to the first and second electrodes 32, 36 of the dental matrix 10 (Figure 1) to apply an electrical current across the OLED. Photoinitiators utilized in dental materials typically absorb light in the 400-500 nm range. Accordingly, the voltage control circuitry 52 will provide current to the OLED sufficient to generate light energy at this wavelength.

As seen in Figure 6, the first and second pin ends 44, 46 are configured to nest within each other when not in use and when the first pin end 44 is received by the second pin end 46, the interconnected pieces act as insulators when the pin tweezer 40 is not in use. The extension 44a on the first pin end 44 conducts electrical current while the remainder 44b of the first pin end 44 is comprised entirely of an insulating material or is coated in an insulating material. The extension 44a is received by receptacle 46a on the second pin end 46, the receptacle having sidewalls and a bottom. The receptacle 46a is dimensioned large enough to preclude extension 44a from contacting the sidewalls or bottom of the receptacle 46a when the extension inserts into the receptacle. Accordingly, when the receptacle 46a receives the extension 44a there is no electrical contact or electrical communication between the first and second pin ends 44, 46, the circuit is not closed and current from the power source will not flow through the first and second pin ends 44, 46.

The PLED dental matrix system of the present invention works in the following manner:
1. The dentist prepares an inter-proximal cavity on the tooth surface ready to receive the light cured restoration material.
2. The PLED dental matrix is inserted into the inter-proximal space and held securely against the tooth with a retaining device.
3. To ensure there is no leaking of the composite between the matrix band and tooth, a dental wedge may be inserted into the inter-proximal space to hold the band firmly against the tooth surface.
4. The cavity is then filled with composite material.
5. The pin tweezer type connector is clamped to the PLED dental matrix and the current is switched on.
6. The PLED dental matrix produces light in the inter-proximal area.
7. The composite material is cured from the inter-proximal direction.
8. The composite material may also be cured using a curing light from the occlusal direction.

## Claims

1. A dental matrix for use when filling inter-proximal cavities with a dental restorative material, the dental matrix comprising:
(a) a metal matrix band (10) comprising an internal surface (24) and an external surface (26, 28); and
(b) an organic light emitting diode (OLED) disposed on at least a first portion of the internal surface (24) of the metal matrix band (10), the OLED layer (30) comprising a first electroluminescent layer disposed between a first and a second electrode layer (32, 36).

2. The dental matrix of Claim 1 wherein the OLED is a polymer-based light emitting diode (PLED); or wherein the second electrode is a continuous layer covering substantially all of the internal surface of the dental matrix band; or wherein the second electrode is arranged in a grid pattern and covers less than that all of the internal surface of the dental matrix band; or wherein the first electroluminescent layer is comprised of a first emissive layer and a first conductive layer and the first emissive and first conductive layers are comprised of material selected from the group consisting of poly (p-phenylene vinylene), polyfluorene, polyphenylene, and derivatives thereof; or wherein the second electrode is exposed; or wherein the matrix band is a sectional matrix; or wherein the first electroluminescent layer is comprised of a first emissive layer and a first conductive layer and the OLED further comprises a second emissive layer and a second conductive layer; or wherein the OLED is configured to generate light energy in the range of 400-500 nanometres.

3. A dental matrix system for use when filling inter-proximal cavities with a light-cured dental restorative material, the dental matrix system comprising:
(a) a dental matrix as defined in claim 1; and
(b) a power source (50) comprising a first electrical lead configured to electrically couple to the first electrode of the OLED layer and a second lead configured to electrically couple to the second electrode of the OLED to apply electrical current to the dental matrix band (10) and activate the OLED layer.

4. The dental matrix system of Claim 3 wherein the OLED is a polymer-based light emitting diode (PLED).

5. The dental matrix system of Claim 3 wherein the power source comprises a pin tweezer with a first and second pin end wherein the first pin end comprises the first electrical lead and the second pin end comprises the second electrical lead.

6. The dental matrix system of Claim 5 wherein the pin tweezer comprises a handle with a storage compartment configured to store the power source and a voltage control circuit.

7. The dental matrix system of Claim 5 wherein the power source comprises a battery; or wherein the second electrode is fully exposed; or wherein the first electroluminescent layer is comprised of a first emissive layer and a first conductive layer and the OLED further comprises a second emissive layer and a second conductive layer; or wherein the power source is configured to apply electrical current across the OLED sufficient to generate light energy in the range of 400- 500 nanometres.

8. The dental matrix system of Claim 5 wherein the first electrical lead of the first pin end is comprised of a first extension in the first pin end and the second pin end comprises a receptacle to receive the first extension, the receptacle having sidewalls and a bottom with a depth and width to receive the first extension and preclude contact of the first extension with the sidewalls or bottom.

9. The dental matrix system of Claim 8 wherein the first pin end is comprised of an insulating material precluding electrical contact with the second pin end when the first extension of the first pin end is received by the receptacle on the second pin end.

10. The dental matrix system of Claim 8 wherein the first pin end is covered with an insulating material precluding electrical contact of the first pin end with the second pin end when the first extension of the first pin end is received by the receptacle on the second pin end.

## Patentansprüche

1. Zahnmedizinische Matrize zur Benutzung beim Füllen von interproximalen Kavitäten mit einem Zahnrestaurationsmaterial, die zahnmedizinische Matrize umfassend:
(a) ein metallisches Matrizenband (10), das eine innere Oberfläche (24) und eine äußere Oberfläche (26, 28) umfasst; und
(b) eine organische Leuchtdiode (OLED), die auf mindestens einem ersten Abschnitt der inneren Oberfläche (24) des metallischen Matrizenbandes (10) angeordnet ist, wobei die OLED-Schicht (30) eine erste elektrolumineszente Schicht umfasst, die zwischen einer ersten und einer zweiten Elektrodenschicht (32, 36) angeordnet ist.

2. Zahnmedizinische Matrize nach Anspruch 1, worin die OLED eine Leuchtdiode auf Polymerbasis (PLED) ist; oder worin die zweite Elektrode eine ununterbrochene Schicht ist, die im Wesentlichen die ganze innere Oberfläche des zahnmedizinischen Matrizenbandes bedeckt; oder worin die zweite Elektrode in einem Raster angeordnet ist und weniger als die ganze innere Oberfläche des zahnmedizinischen Matrizenbandes bedeckt; oder worin die erste elektrolumineszente Schicht eine erste Emitterschicht und eine erste Leiterschicht umfasst und die erste Emitter- und die erste Leiterschicht Material umfassen, das aus der Gruppe ausgewählt ist, die aus Poly(p-phenylenvinylen), Polyfluoren, Polyphenylen und Derivaten davon besteht; oder worin die zweite Elektrode freiliegend ist; oder worin das Matrizenband eine Teilmatrize ist; oder worin die erste elektrolumineszente Schicht eine erste Emitterschicht und eine erste Leiterschicht umfasst und die OLED ferner eine zweite Emitterschicht und eine zweite Leiterschicht umfasst; oder worin die OLED ausgestaltet ist, um Lichtenergie im Bereich von 400 bis 500 Nanometern zu erzeugen.

3. Zahnmedizinisches Matrizensystem zur Benutzung beim Füllen von interproximalen Kavitäten mit einem lichthärtenden Zahnrestaurationsmaterial, das zahnmedizinische Matrizensystem umfassend:
(a) eine zahnmedizinische Matrize, wie in Anspruch 1 definiert; und
(b) eine Energiequelle (50), die eine erste elektrische Leitung, die ausgestaltet ist, um mit der ersten Elektrode der OLED-Schicht elektrisch gekoppelt zu werden, und eine zweite Leitung umfasst, die ausgestaltet ist, um mit der zweiten Elektrode der OLED elektrisch gekoppelt zu werden, um einen elektrischen Strom an das zahnmedizinische Matrizenband (10) anzulegen und die OLED-Schicht zu aktivieren.

4. Zahnmedizinisches Matrizensystem nach Anspruch 3, worin die OLED eine Leuchtdiode auf Polymerbasis (PLED) ist.

5. Zahnmedizinisches Matrizensystem nach Anspruch 3, worin die Energiequelle eine Stiftpinzette mit einem ersten und einem zweiten Stiftende umfasst, worin das erste Stiftende die erste elektrische Leitung umfasst und das zweite Stiftende die zweite elektrische Leitung umfasst.

6. Zahnmedizinisches Matrizensystem nach Anspruch 5, worin die Stiftpinzette einen Haltegriff mit einem Aufnahmefach umfasst, das ausgestaltet ist, um die Energiequelle und einen Spannungsregelkreis aufzunehmen.

7. Zahnmedizinisches Matrizensystem nach Anspruch 5, worin die Energiequelle eine Batterie umfasst; oder worin die zweite Elektrode völlig freiliegend ist; oder worin die erste elektrolumineszente Schicht eine erste Emitterschicht und eine erste Leiterschicht umfasst und die OLED ferner eine zweite Emitterschicht und eine zweite Leiterschicht umfasst; oder worin die Energiequelle ausgestaltet ist, um einen elektrischen Strom über der OLED anzulegen, der ausreicht, um Lichtenergie im Bereich von 400 bis 500 Nanometern zu erzeugen.

8. Zahnmedizinisches Matrizensystem nach Anspruch 5, worin die erste elektrische Leitung des ersten Stiftendes einen ersten Fortsatz im ersten Stiftende umfasst und das zweite Stiftende eine Fassung zum Aufnehmen des ersten Fortsatzes umfasst, wobei die Fassung Seitenwände und einen Boden mit einer Tiefe und Breite zum Aufnehmen des ersten Fortsatzes und Verhindern des Kontaktes des ersten Fortsatzes mit den Seitenwänden oder dem Boden aufweist.

9. Zahnmedizinisches Matrizensystem nach Anspruch 8, worin das erste Stiftende ein Isoliermaterial umfasst, welches den elektrischen Kontakt mit dem zweiten Stiftende verhindert, wenn der erste Fortsatz des ersten Stiftendes von der Fassung an dem zweiten Stiftende aufgenommen wird.

10. Zahnmedizinisches Matrizensystem nach Anspruch 8, worin das erste Stiftende mit einem Isoliermaterial bedeckt ist, welches den elektrischen Kontakt des ersten Stiftendes mit dem zweiten Stiftende verhindert, wenn der erste Fortsatz des ersten Stiftendes von der Fassung an dem zweiten Stiftende aufgenommen wird.

## Revendications

1. Matrice dentaire pour l'utilisation lors du remplissage des cavités inter-proximales avec un matériau de restauration dentaire, la matrice dentaire comprenant :
(a) une bande de matrice métallique (10) comprenant une surface interne (24) et une surface externe (26, 28) ; et
(b) une diode électroluminescente organique (OLED) disposée au moins sur une première partie de la surface interne (24) de la bande de matrice métallique (10), la couche OLED (30) comprenant une première couche électroluminescente disposée entre une première et une deuxième couche d'électrode (32, 36).

2. Matrice dentaire selon la revendication 1, dans lequel l'OLED est une diode électroluminescente à base de polymère (PLED) ; ou dans lequel la deuxième électrode est une couche continue recouvrant substantiellement toute la surface interne de la bande de matrice dentaire ; ou dans lequel la deuxième électrode est disposée dans un quadrillage et recouvre moins que toute la surface interne de la bande de matrice dentaire ; ou dans lequel la première couche électroluminescente est constituée d'une première couche émettrice et une première couche conductrice et la première couche émettrice et la première couche conductrice sont constituées de matériau choisi parmi le groupe constitué de poly(p-phénylène vinylène), polyfluorène, polyphénylène, et des dérivés de ceux-ci ; ou dans lequel la deuxième électrode est exposée ; ou dans lequel la bande de matrice est une matrice partielle ; ou dans lequel la première couche électroluminescente est constituée d'une première couche émettrice et une première couche conductrice et l'OLED comprend en outre une deuxième couche émettrice et une deuxième couche conductrice ; ou dans lequel l'OLED est configurée pour générer de l'énergie lumineuse dans la gamme de 400 - 500 nanomètres.

3. Système de matrice dentaire pour l'utilisation lors du remplissage des cavités inter-proximales avec a matériau de restauration dentaire durci à la lumière, le système de matrice dentaire comprenant :
(a) une matrice dentaire selon la revendication 1 ; et
(b) une source d'énergie (50) comprenant un premier conducteur électrique configuré pour coupler électriquement à la première électrode de la couche OLED et un deuxième conducteur configuré pour coupler électriquement à la deuxième électrode de l'OLED pour appliquer un courant électrique à la bande de matrice dentaire (10) et pour activer la couche OLED.

4. Système de matrice dentaire selon la revendication 3, dans lequel l'OLED est une diode électroluminescente à base de polymère (PLED).

5. Système de matrice dentaire selon la revendication 3, dans lequel la source d'énergie comprend une précelle avec une première et une deuxième extrémités de tige où la première extrémité de tige comprend le premier conducteur électrique et la deuxième extrémité de tige comprend le deuxième conducteur électrique.

6. Système de matrice dentaire selon la revendication 5, dans lequel la précelle comprend un manche avec un compartiment de stockage configuré pour stocker la source d'énergie et un circuit de contrôle de tension.

7. Système de matrice dentaire selon la revendication 5, dans lequel la source d'énergie comprend une batterie ; ou dans lequel la deuxième électrode est totalement exposée ; ou dans lequel la première couche électroluminescente est constituée d'une première couche émettrice et d'une première couche conductrice et l'OLED comprend en outre une deuxième couche émettrice et une deuxième couche conductrice ; ou dans lequel la source d'énergie est configurée pour appliquer un courant électrique à travers l'OLED suffisant pour générer de l'énergie lumineuse dans la gamme de 400 - 500 nanomètres.

8. Système de matrice dentaire selon la revendication 5, dans lequel le premier conducteur électrique de la première extrémité de tige est constitué d'une première extension dans la première extrémité de tige et la deuxième extrémité de tige comprend un réceptacle pour recevoir la première extension, le réceptacle ayant des parois latérales et un fond avec une profondeur et une largeur pour recevoir la première extension et empêcher le contact de la première extension avec les parois latérales ou le fond.

9. Système de matrice dentaire selon la revendication 8, dans lequel la première extrémité de tige est constituée d'un matériau isolant prévenant tout contact électrique avec la deuxième extrémité de tige lorsque la première extension de la première extrémité de tige est reçue par le réceptacle sur la deuxième extrémité de tige.

10. Système de matrice dentaire selon la revendication 8, dans lequel la première extrémité de tige est recouverte avec un matériau isolant prévenant tout contact électrique de la première extrémité de tige avec la deuxième extrémité de tige lorsque la première extension de la première extrémité de tige est reçue par le réceptacle sur la deuxième extrémité de tige.
